# EUROPEAN PATENT APPLICATION

(11) **EP 1 191 238 A2**
(43) Date of publication of application: **27.03.2002**
(21) Application number: 01500231.4
(22) Date of filing: 20.09.2001
(51) Int. Cl.: F16B 25/10

(54) **Self-tapping screw for thin sheets**

(30) Priority: 21.09.2000 ES 200002351 U
(71) Applicant: Celo Distribucion, S.A., 08211 Castellar del Valles (ES)
(72) Inventor: Ceravalls Pujol, Ramon, 08017 Barcelona (ES)
(74) Representative: Ponti Sales, Adelaida

(57) **Abstract**

It comprises a drill-point (3) with a diameter of between 60% and 70% of the nominal thread (2) diameter; the screw has a transition zone (4) of at least three turns (41,42,43,44) of thread between the drill-point (3) and the nominal thread (2) diameter.

It permits firm fixing in thin sheets, and at the same time it is quick and easy to fit.

## Description

The present invention relates to a self-tapping screw for thin sheets, of the type that includes a head, a thread and a drill-point of a diameter smaller than the diameter of the thread, and which is suitable for securing pieces onto thin sheets.

### BACKGROUND OF THE INVENTION

Known at present in the art are screws for securing pieces onto a sheet, said screws having a self-tapping drill-point by means of which the screw itself drills the sheet.

In some of these screws, the drill-point makes a hole of equivalent diameter, between the minimum diameter of the base of the screw thread and the exterior diameter of the thread. These screws work correctly when they are used in thick sheets, for example sheets of thicknesses between 0.7 and 3 times the diameter of the screw; they are not suitable, however, for thin sheets, because the hole made by the drill-point is too large to allow the thread of the screw to remain firmly fixed.

For thin sheets, attempts have been made to develop screws with drill-points in which the point is of smaller diameter than the shank of the screw and the thread increases progressively until it reaches the nominal diameter.

The problem in this case is that two opposing requirements have to be balanced: on the one hand, it is advisable that the diameter of the drill-point be as small as possible, so as to provide a tighter fit between the hole and thread and, therefore, firmer securing; on the other hand, however, with too fine a point or with excessively rapid increase in the thread diameter, the screw has difficulty working its way through the sheet and can even become deformed or tear the sheet.

### DESCRIPTION OF THE INVENTION

The aim of the present invention is to provide a self-tapping screw that permits firm fixing in thin sheets having a thickness of between approximately 10% and 20% of the nominal diameter of the screw, and that is at the same time quick and easy to fit.

In accordance with this aim, the screw of the invention is characterised in that the drill-point has a diameter of between 60% and 70% of the nominal thread diameter, and in that the screw has a transition zone of at least three turns of thread between the drill-point and the nominal thread diameter.

Thanks to this geometrical configuration, the screw cuts a hole in the sheet quite easily, and at the same time it creates an extrusion and a female thread, in such a way that it can be left firmly secured in the sheet.

Preferably, the aforesaid transition zone is of no more than five thread turns; a length greater than this is not necessary for inserting the screw and is not useful for securing it, and would therefore increase the cost unnecessarily.

### BRIEF DESCRIPTION OF THE DRAWINGS

For a better understanding of all that is set out herein some drawings are attached which, schematically and solely by way of non-restrictive example, show a practical case of embodiment.

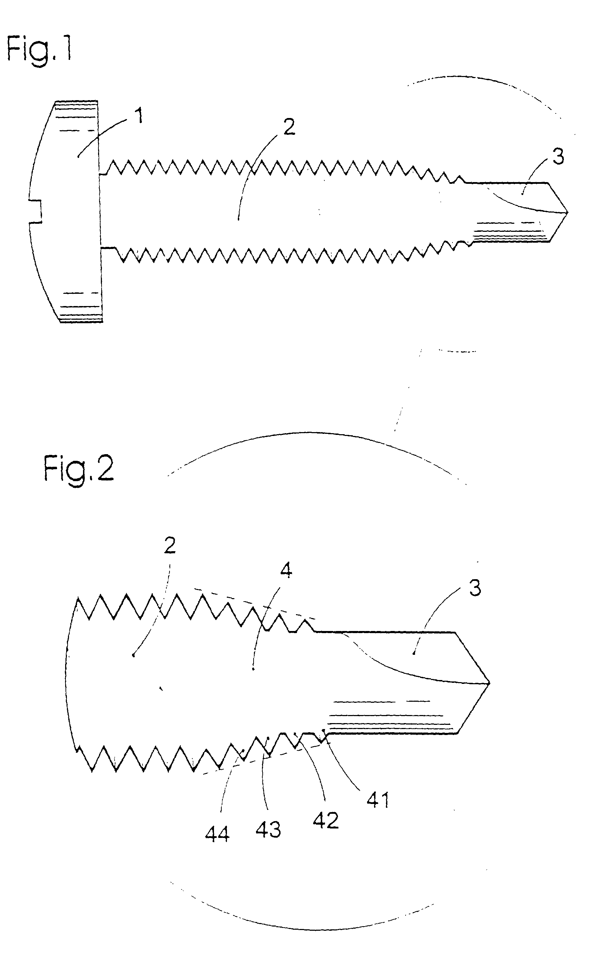

In said drawings, Figure 1 shows a screw in accordance with the invention, and Figure 2 is a detail at enlarged scale of the point of the screw.

### DESCRIPTION OF A PREFERRED EMBODIMENT

The self-tapping screw of Figure 1 is formed by a head 1, a threaded shank 2, for example with a metric thread, and a drill-point 3, thanks to which the screw can be used directly on the sheet without the need to make a hole beforehand in order to fit it.

The sheets for which the screw of the invention has been designed are metallic sheets, for example of steel and aluminium, with a thickness of between 10% and 20% of the nominal diameter of the screw.

The drill-point 3 has a diameter of between 60% and 70% of the nominal diameter of the screw 2.

The detail of Figure 2 shows the point of the screw at enlarged scale. The drill-point 3 is attached to a transition zone 4, formed in this example by four turns of thread 41, 42, 43, 44, each one of which has a diameter slightly larger than the preceding one.

When the screw is used to fix a piece onto a sheet, the point 3 first makes a hole in the sheet, after which the screw advances as the transition zone forms a thread in the sheet, by deformation thereof, starting from the hole.

The transition could be made more abrupt, with only three turns of thread, but not with fewer, for this would hinder extrusion of the sheet by the thread as the transition zone 4 of the screw penetrates into the hole made by the point 3.

The transition could also be gentler, for example with five thread turns; however, the transition zone is not used for securing, so that further lengthening of that zone would unnecessarily increase the quantity of material used and therefore increase the cost of the screw.

Despite the fact that one specific embodiment of this invention has been described and shown, it is obvious that an expert in the subject could make variants and modifications, or replace some details by others that are technically equivalent, without departing from the sphere of protection defined in the attached claims.

Specifically, the invention can be applied to screws with threads of any diameter, pitch and geometry.

Moreover the shape of the head of the screw, its form of coupling with a driving tool and the type of shank thread (metric, sheet, etc.) will depend on the requirements for each particular use.

## Claims

1. Self-tapping screw for thin sheets, which includes a head (1), a thread (2) and a drill-point (3) of smaller diameter than the diameter of the thread (2), **characterised in that** the drill-point (3) has a diameter of between 60% and 70% of the nominal thread (2) diameter, and **in that** the screw has a transition zone (4) of at least three turns (41,42,43,44) of thread between the drill-point (3) and the nominal thread (2) diameter.

2. Screw as claimed in Claim 1, **characterised in that** the aforesaid transition zone (4) is of no more than five thread turns (41,42,43,44).
